# DEMANDE DE BREVET EUROPEEN

(11) **EP 0 664 243 A1**
(43) Date de publication de la demande: **26.07.1995**
(21) Numéro de dépôt: 95400103.8
(22) Date de dépôt: 19.01.1995
(51) Int. Cl.: B60R 13/07, B60R 13/00

(54) **Bandeau du type à transparent pour ouvrant de véhicule**

(30) Priorité: 20.01.1994 FR 9400585
(71) Demandeur: VALEO VISION, 93000 Bobigny (FR)
(72) Inventeur: Caron, Philippe, F-27950 Saint-Marcel (FR)
(74) Mandataire: Martin, Jean-Jacques

(57) **Abrégé**

La présente invention concerne un bandeau pour ouvrant de véhicule, comportant un socle (22) fixé par son fond (22a) sur la carrosserie (21) dudit ouvrant, ainsi qu'au moins un transparent (23)porté par ce socle (22), ce bandeau comportant également un passage (25) pour l'évacuation de l'eau, ce passage (25) s'étendant d'une ouverture (26) en la partie supérieure du bandeau jusqu'à une ouverture (27) en sa partie inférieure. Ce passage (25) pour l'évacuation de l'eau est ménagé entre le fond (22a) du socle (22) et le transparent (23), le fond (22a) dudit socle (22) épousant la carrosserie (21) sans dicontinuité au niveau du passage (25) pour l'évacuation de l'eau.

## Description

La présente invention est relative à un bandeau du type à transparent pour ouvrant de véhicule.

Un tel bandeau est par exemple un bandeau de signalisation ou de décoration. Il comporte classiquement un socle par lequel il est fixé à la carrosserie du véhicule, ainsi qu'un transparent extérieur porté par ce socle.

Sur les véhicules dont un ouvrant, tel que le hayon arrière ou l'ouvrant de coffre, sont munis d'un tel bandeau, il est nécessaire de prévoir sur le bandeau un passage pour l'évacuation de l'eau, de façon à éviter que l'eau de pluie ou de lavage accumulée sur la partie supérieure du bandeau ne s'écoule brutalement à l'ouverture de cet ouvrant.

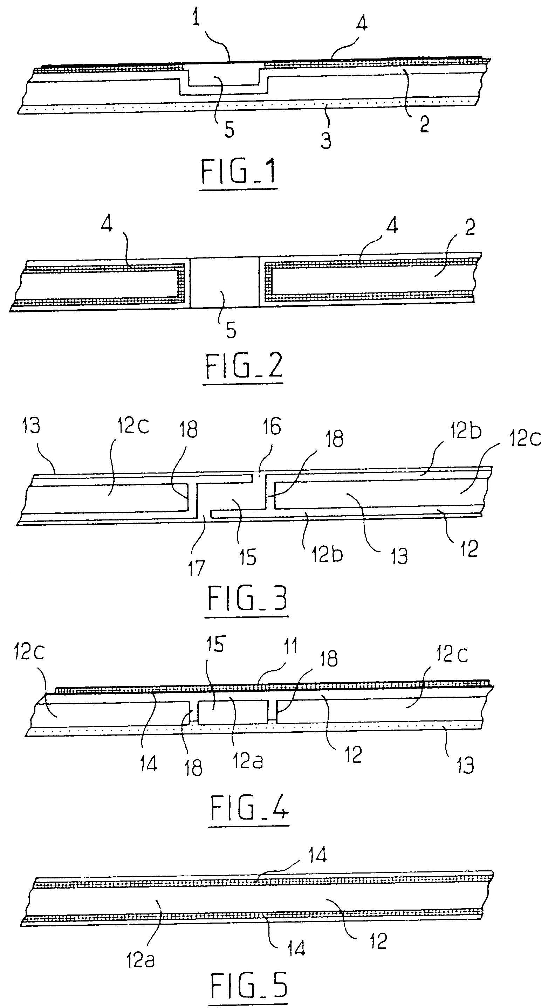

On a représenté schématiquement sur les figures 1 et 2, des vues en coupe longitudinale d'un bandeau de l'art antérieur présentant un tel passage d'évacuation.

Sur ces figures 1 et 2, la tôle de la carrosserie a été référencée par 1, le socle par 2, le transparent fermant les cavités de ce socle par 3. Un joint 4 est interposé entre les faces en regard de la carrosserie 1 et du fond du socle 2.

Pour permettre l'évacuation de l'eau à partir de la tranche supérieure du bandeau, il est ménagé entre la tôle 1 de la carrosserie et le socle 2, un passage 5 s'étendant sur toute la hauteur dudit bandeau. Ce passage 5 est constitué par un renfoncement du fond du socle 2, ledit fond étant écarté de la carrosserie dans la zone de ce renfoncement.

Un tel renfoncement fragilise en flexion le socle et le bandeau. En outre, il interrompt la fixation et l'étanchéité du bandeau au droit de passage d'eau. Sur le bandeau illustré sur les figures 1 et 2, le joint 4 est discontinu et s'étend de part et d'autre du passage d'eau 5.

L'invention permet de pallier ces inconvénients.

Elle a pour objet un bandeau pour ouvrant de véhicule, comportant un socle fixé par son fond sur la carrosserie dudit ouvrant, ainsi qu'au moins un transparent porté par ce socle, ce bandeau comportant également un passage pour l'évacuation de l'eau, ce passage s'étendant d'une ouverture en la partie supérieure du bandeau jusqu'à une ouverture en sa partie inférieure, caractérisé en ce que ce passage pour l'évacuation de l'eau est ménagé entre le fond du socle et le tranparent, le fond dudit socle épousant la carrosserie sans dicontinuité au niveau du passage pour l'évacuation de l'eau.

D'autres caractéristiques et avantages de l'invention ressortiront encore de la description qui suit. Cette description est purement illustrative et non limitative. Elle doit être lue en regard des dessins annexés sur lesquels :
- la figure 3 est une représentation schématique en vue en coupe d'un bandeau conforme à l'invention ;
- les figures 4 et 5 sont des vues en coupe semblables à celles des figures 1 et 2, du bandeau de la figure 3, les plans de coupe des figures 3 et 5 étant parallèles ;
- la figure 6 est une vue de côté d'un bandeau conforme à un mode de réalisation particulier de I'invention ;
- les figures 7 et 8 sont des vues en coupe selon les lignes VII-VII et VIII-VIII de la figure 6.

Le bandeau représenté sur les figures 3 à 5 comporte un socle 12, ainsi qu'un transparent 13. Le socle 12 est de section droite de forme générale en U et présente dans sa longueur deux cavités 12c. Le fond dudit socle 12 a été référencé par 12a, ses deux branches longitudinales par 12b.

Les deux cavités 12c sont toutes deux fermées par le transparent 13, celui-ci s'étendant sur toute la longueur du socle 12. Le transparent 13 est fixé par soudage ou collage sur les tranches des branches 12b.

Le socle 12 est fixé sur la tôle 11 de la carrosserie par son fond 12a. Deux bandes de joint 14 sont à cet effet interposées entre le fond 12a du socle 12 et la tôle 11. Ces deux bandes 14 sont parallèles et s'étendent sur toute la longueur du bandeau, sans discontinuité.

Conformément à l'invention, un passage 15 pour l'évacuation de l'eau est ménagé sur le bandeau entre le fond 12a et le transparent 13. Ce passage 15 présente une première ouverture d'extrémité 16 sur la branche 12b supérieure du bandeau, ainsi qu'une deuxième ouverture d'extrémité 17 sur la branche 12b inférieure.

Ce passage 15 est isolé des cavités 12c par des parois 18 s'étendant chacune à l'intérieur du socle 12, d'une part, du fond 12a jusqu'au transparent 13 et, d'autre part, entre les deux branches 12b. Les tranches de ces parois 18 opposées au fond 12a sont soudées ou collées au transparent 13.

De façon à réaliser une continuité de la rigidité et de la résistance mécanique en flexion du bandeau et éviter l'apparition de points faibles sur celui-ci, les ouvertures 16 à 17 sont décalées selon la direction longitudinale du bandeau.

Cette configuration permet d'éviter les risques de rupture lors de la manutention du bandeau.

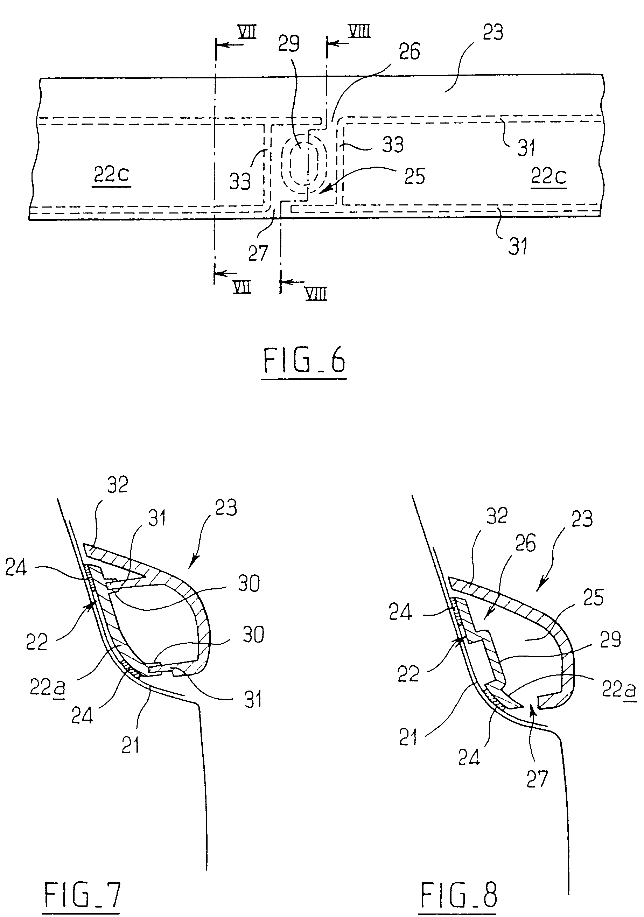

Un exemple particulier de bandeau conforme à l'invention a été illustré sur les figures 6 à 8. On a repris pour les éléments de cette réalisation qui se retrouvent sur le bandeau des figures 3 à 5, la même numérotation de référence augmentée de 10.

Le bandeau qui est représenté sur les figures 6 à 8 comporte un socle 22 fermé par un transparent 23. Ledit socle 22 est fixé sur la tôle 21 de la carrosserie par l'intermédiaire de deux joints-colle 24 s'étendant sans dicontinuité sur toute la longueur du fond 22a du socle 22.

Conformément à l'invention, ce bandeau présente un passage 25 pour l'évacuation de l'eau, ménagé entre son transparent 23 et son socle 22.

Le socle 22 est principalement constitué par son fond 22a qui épouse la forme de la carrosserie 21 et qui présente deux murets longitudinaux 30 sur lesquels sont soudées des parois 31 longitudinales. Ces parois 31 sont d'une pièce avec le transparent 23 et s'étendent du transparent 23 jusqu'audit fond 22a. Elles sont interrompues au niveau des ouvertures supérieure et inférieure 26 et 27 du passage 25.

Le transparent 23 se prolonge en sa partie supérieure, au-delà de la paroi 31 supérieure, par un rebord 32 qui recouvre ladite paroi 31, ainsi qu'en partie la tranche supérieure du socle 22. La tranche de ce rebord 32 est légèrement espacée par rapport à la carrosserie 21. Lorsque ce bandeau est en place sur la carrosserie 21, ce rebord 32 est incliné par rapport à l'horizontale, de sorte que l'eau reçue sur la partie supérieure du bandeau s'évacue principalement en coulant sur la surface externe du transparent 23.

Les ouvertures 26 et 27 sont décalées selon la direction longitudinale du socle 22 et du transparent 23.

Le passage 25 est en outre délimité par deux parois transversales 33, qui s'étendent, d'une part, entre les deux parois 31 et, d'autre part, du transparent 23 jusqu'au fond 22a. Ces parois 33 sont d'une pièce avec ledit transparent 23 et sont soudées au socle 22 par leur bord d'extrémité. Le passage 25 est ainsi isolé de façon étanche des cavités de réflexion 22c, qui sont de part et d'autre des parois transversales 33.

Le socle 22 présente également, de part et d'autre des cavités 22c qui ont été représentées, d'autres cavités de réflexion de volume plus important.

La rigidité du socle 22 est renforcée au niveau du passage 25 par un renfoncement 29 de contour fermé, par exemple elliptique, en saillie vers l'intérieur du bandeau.

La fixation réalisée par les bandes 24 de joint-colle est avantageusement complétée par des moyens de fixation du type à vis ou à rivet.

## Revendications

1. Bandeau pour ouvrant de véhicule, comportant un socle (12, 22) fixé par son fond (12a, 22a) sur la carrosserie (11, 21) dudit ouvrant, ainsi qu'au moins un transparent (13, 23) porté par ce socle (12, 22), ce bandeau comportant également un passage (15, 25) pour l'évacuation de l'eau, ce passage (15, 25) s'étendant d'une ouverture (16, 26) en la partie supérieure du bandeau jusqu'à une ouverture (17, 27) en sa partie inférieure, caractérisé en ce que ce passage (15, 25) pour l'évacuation de l'eau est ménagé entre le fond (12a, 22a) du socle (12, 22) et le transparent (13, 23), le fond (12a, 22a) dudit socle (12, 22) épousant la carrosserie (11, 21) sans discontinuité au niveau du passage (15, 25) pour l'évacuation de l'eau.

2. Bandeau selon la revendication 1, caractérisé en ce qu'au moins une bande de joint (14, 24) est interposée entre la carrosserie (11, 21) et le fond (12a, 22a) du socle (12, 22), cette bande (14, 24) s'étendant selon la direction longitudinale du socle (12, 22) sans discontinuité au niveau du passage (15, 25) d'évacuation d'eau.

3. Bandeau selon la revendication 2, caractérisé en ce que deux bandes de joint (14, 24) sont interposées entre la carrosserie (11, 21) et le fond (12a, 22a) du socle (12, 22), ces deux bandes (14, 24) s'étendant selon la direction longitudinale du socle (12, 22) sans discontinuité au niveau du passage (15, 25) d'évacuation d'eau.

4. Bandeau selon l'une des revendications précédentes, caractérisé en ce que les ouvertures (16, 26; 17, 27) supérieure et inférieure du passage (15, 25) d'évacuation de l'eau sont ménagées sur des parois longitudinales (12b,31) du socle (12, 22) et/ou du transparent (13, 23), ces parois (12b, 31) s'étendant du fond (12a, 22a) du socle (12, 22) jusqu'audit transparent (13, 23)

5. Bandeau selon la revendication 4, caractérisé en ce que les ouvertures (16, 26; 17, 27) supérieure et inférieure sont décalées selon la direction longitudinale du socle (12, 22) et du transparent (13, 23).

6. Bandeau selon l'une des revendications précédentes, caractérisé en ce que le socle (12, 22) comporte au moins deux cavités (12c, 22c) fermées par le transparent et disposées de part et d'autre du passage (15, 25) d'évacuation de l'eau, ce passage (15, 25) étant isolé de façon étanche desdites cavités (12c, 22c).

7. Bandeau selon la revendication 6, caractérisé en ce que le passage (15, 25) est isolé de façon étanche desdites cavités (12c, 22c) de réflexion par des parois transversales (18, 33) qui s'étendent entre le fond (12a, 22a) du socle (12, 22) et ledit transparent (13, 23).

8. Bandeau selon la revendication 7, caractérisé en ce que ces parois transversales (18, 33) sont fixées au socle (12, 22) et/ou au transparent (13, 23) par collage et/ou soudage.

9. Bandeau selon l'une des revendications précédentes, caractérisé en ce que le fond (22a) du socle (22) présente, au niveau du passage (25) d'évacuation d'eau, un renfoncement de rigidification de contour fermé.

10. Bandeau d'ouvrant de coffre ou de hayon arrière de véhicule automobile selon l'une des revendications précédentes.
